# EUROPEAN PATENT APPLICATION

(11) **EP 4 432 031 A1**
(43) Date of publication of application: **18.09.2024**
(21) Application number: 22911175.2
(22) Date of filing: 19.12.2022
(51) Int. Cl.: G05B 23/02

(54) **NORMAL VECTOR REGISTRATION DEVICE, EQUIPMENT-ABNORMALITY-MONITORING SYSTEM, AND EQUIPMENT-ABNORMALITY-MONITORING METHOD**

(30) Priority: 22.12.2021 WO PCT/JP2021/047577
(71) Applicant: JFE Steel Corporation, Tokyo 100-0011 (JP)
(72) Inventor: HIRATA, Takehide, Tokyo 100-0011 (JP); MATSUSHITA, Masafumi, Tokyo 100-0011 (JP)
(74) Representative: Haseltine Lake Kempner LLP
(86) International application number: PCT/JP2022/046667
(87) International publication number: WO 2023/120473

(57) **Abstract**

A normal vector registration device according to the present invention includes: a time-series signal clipping processing unit configured to clip a time-series signal in a predetermined period from M (≥ 2) or more types of time-series signals indicating an operation state of a facility during normal operation of the facility; a normal vector registration processing unit configured to generate an M-dimensional vector including M types of variables at a same time point from the time-series signal clipped by the time-series signal clipping processing unit, and register the generated M-dimensional vector at each time point in a database as a normal vector; and a normal vector distribution density leveling unit configured to divide a vector space of the normal vectors, select a predetermined number of normal vectors from the normal vectors included in each divided space so as to level a distribution density of the normal vectors, and optimize a division number of the vector space of the normal vectors such that a total number of the selected normal vectors becomes a predesignated number.

## Description

### Field

The present invention relates to a normal vector registration device, a facility abnormality monitoring system, and a facility abnormality monitoring method. Background

Patent Literature 1 describes an abnormality monitoring system including: a normal data extraction unit that extracts a large number of pieces of normal data, with data of the same timing defined as one set of normal data, from time-series data of a plurality of signals obtained from a facility during normal operation; a monitoring target data extraction unit that extracts data of the same timing as one set of monitoring target data from time-series data of a plurality of signals obtained from the facility during operation; and a determination unit that represents the normal data and the monitoring target data as points in a same variable space having each of the plurality of signals as a variable, and determines abnormality of the facility based on a degree of deviation of the monitoring target data from a distribution of the normal data.

### Citation List

### Patent Literature

Patent Literature 1: JP 6003718 B

### Summary

### Technical Problem

According to the abnormality monitoring system described in Patent Literature 1, it is possible to perform universal and high-accuracy detection of abnormality in a facility having a nonlinear characteristic. However, the abnormality monitoring system described in Patent Literature 1 has problems including a problem of deterioration of calculation speed with excessive number of pieces of normal data, which causes a failure in determination of abnormality within a predetermined time and a problem of dramatically increased data capacity, which leads to an increase in cost. For this reason, it is necessary to reduce the number of normal data. However, reducing the number of pieces of normal data with uneven distribution density of normal data would cause a problem of deterioration of abnormality detection accuracy. With such a background, it has been desired to provide a technique of compressing the number of pieces of normal data without causing unevenness in the distribution density of the normal data.

The present invention has been made in view of the above problems, and aims to provide a normal vector registration device, a facility abnormality monitoring system, and a facility abnormality monitoring method capable of achieving a high calculation speed and cost reduction by data capacity compression while maintaining abnormality detection accuracy.

### Solution to Problem

A normal vector registration device according to a first aspect of the present invention includes: a time-series signal clipping processing unit configured to clip a time-series signal in a predetermined period from M (≥ 2) or more types of time-series signals indicating an operation state of a facility during normal operation of the facility; a normal vector registration processing unit configured to generate an M-dimensional vector including M types of variables at a same time point from the time-series signal clipped by the time-series signal clipping processing unit, and register the generated M-dimensional vector at each time point in a database as a normal vector; and a normal vector distribution density leveling unit configured to divide a vector space of the normal vectors, select a predetermined number of normal vectors from the normal vectors included in each divided space so as to level a distribution density of the normal vectors, and optimize a division number of the vector space of the normal vectors such that a total number of the selected normal vectors becomes a predesignated number.

In the above-described normal vector registration device according to the first aspect of the present invention, the normal vector distribution density leveling unit is configured to equally divide the vector space into a plurality of cells, and select a predetermined number of normal vectors from each cell including normal vectors so as to level normal vector distribution density, and optimize sizes of the cells such that a total number of the selected normal vectors becomes a predesignated number.

In the above-described normal vector registration device according to the first aspect of the present invention, the normal vector distribution density leveling unit is configured to set, within the vector space, a plurality of spheres whose center positions do not overlap each other and whose center positions are defined as randomly selected normal vectors, select a predetermined number of normal vectors from each sphere so as to level the distribution density of the normal vectors, and optimize the sizes of the spheres such that the total number of the selected normal vectors becomes a predesignated number.

The above-described normal vector registration device according to the first aspect of the present invention further includes a normal vector selection unit configured to: calculate a distance between each normal vector registered in the database and another normal vector registered in the database; and delete the normal vector from the database in accordance with the calculated distance.

In the above-described normal vector registration device according to the first aspect of the present invention, the normal vector selection unit is configured to perform processing including: calculating a distance between each normal vector registered in the database and another normal vector registered in the database; extracting a predetermined number of the other normal vectors as neighboring vectors in ascending order of the calculated distance; and deleting the normal vector from the database in accordance with a distance to a centroid vector of the extracted neighboring vector.

A normal vector registration device according to a second aspect of the present invention includes: a time-series signal clipping processing unit configured to clip a time-series signal in a predetermined period from M (≥ 2) or more types of time-series signals indicating an operation state of a facility during normal operation of the facility; a normal vector registration processing unit configured to generate an M-dimensional vector including M types of variables at a same time point from the time-series signal clipped by the time-series signal clipping processing unit, and register the generated M-dimensional vector at each time point in a database as a normal vector; a normal vector selection unit configured to: calculate a distance between each normal vector registered in the database and another normal vector registered in the database; and delete the normal vector from the database in accordance with the calculated distance; and a normal vector distribution density leveling unit configured to delete the normal vector from the database in accordance with vector distribution density in an M-dimensional space formed by the normal vector registered in the database.

In the above-described normal vector registration device according to the second aspect of the present invention, the normal vector selection unit is configured to perform processing including: calculating a distance between each normal vector registered in the database and another normal vector registered in the database; extracting a predetermined number of the other normal vectors as neighboring vectors in ascending order of the calculated distance; and deleting the normal vector from the database in accordance with a distance to a centroid vector of the extracted neighboring vector.

In the above-described normal vector registration device according to the second aspect of the present invention, the normal vector distribution density leveling unit is configured to set a value range for each of the variables, equally divide the value range to form a plurality of partial spaces, and delete the normal vector from the database such that the number of the normal vectors in each of the partial spaces is a predetermined number or less.

In the above-described normal vector registration device according to the second aspect of the present invention, the normal vector distribution density leveling unit is configured to set a value range for each of the variables, equally divide the value range to form a plurality of partial spaces, and select the normal vectors such that the number of the normal vectors in each of the partial spaces is a predetermined number.

In the above-described normal vector registration device according to the second aspect of the present invention, the normal vector distribution density leveling unit is configured to delete the normal vector from the database such that the number of the normal vectors included in a spherical region having a predetermined radius centered on each of the normal vectors registered in the database is a predetermined number or less.

A facility abnormality monitoring system according to the present invention includes an abnormality determination unit configured to: clip a time-series signal in a predetermined period from M (≥ 2) or more types of time-series signals indicating an operation state of a facility during an abnormality monitoring period of the facility; generate, from the clipped time-series signal, an M-dimensional vector including M types of variables at a same time point as an abnormality determination target vector; and conduct an abnormality determination of the facility based on a distance between the generated abnormality determination target vector and a normal vector registered in a database by the normal vector registration device according to the first or the second aspect of the present invention.

In the above-described facility abnormality monitoring system according to the present invention, the abnormality determination unit is configured to determine whether to repair the facility based on the number of times the facility has been determined to be abnormal.

A facility abnormality monitoring method according to the present invention includes an abnormality determination step including: clipping a time-series signal in a predetermined period from M (≥ 2) or more types of time-series signals indicating an operation state of a facility during an abnormality monitoring period of the facility; generating, from the clipped time-series signal, an M-dimensional vector including M types of variables at a same time point as an abnormality determination target vector; and conducting an abnormality determination of the facility based on a distance between the generated abnormality determination target vector and a normal vector registered in a database by the normal vector registration device according to any one of claims 1 to 5.

### Advantageous Effects of Invention

With the normal vector registration device, the facility abnormality monitoring system, and the facility abnormality monitoring method according to the present invention, the distribution density of normal data can be leveled without causing unevenness from the original data distribution of the normal data. This makes it possible to increase the calculation speed without decreasing abnormality detection accuracy, and achieve an increase in the calculation speed and a reduction in cost by data capacity compression while maintaining abnormality detection accuracy.

### Brief Description of Drawings

FIG. 1 is a block diagram illustrating a configuration of a facility abnormality monitoring system according to an embodiment of the present invention.
FIG. 2 is a diagram illustrating vector selection processing according to an embodiment of the present invention.
FIG. 3 is a diagram illustrating normal vector distribution after execution of vector selection processing.
FIG. 4 is a diagram illustrating distribution density leveling processing according to an embodiment of the present invention.
FIG. 5 is a diagram illustrating normal vector distribution after execution of distribution density leveling processing according to an embodiment of the present invention.
FIG. 6 is a diagram illustrating a modification of the distribution density leveling processing according to an embodiment of the present invention.
FIG. 7 is a flowchart illustrating a flow of distribution density leveling processing according to another embodiment of the present invention.
FIG. 8 is a diagram illustrating distribution density leveling processing illustrated in FIG. 7.
FIG. 9 is a flowchart illustrating a flow of a modification of the distribution density leveling processing according to the another embodiment of the present invention.
FIG. 10 is a diagram illustrating distribution density leveling processing illustrated in FIG. 9.

### Description of Embodiments

Hereinafter, a configuration of a facility abnormality monitoring system according to an embodiment of the present invention will be described with reference to the drawings.

### [Configuration]

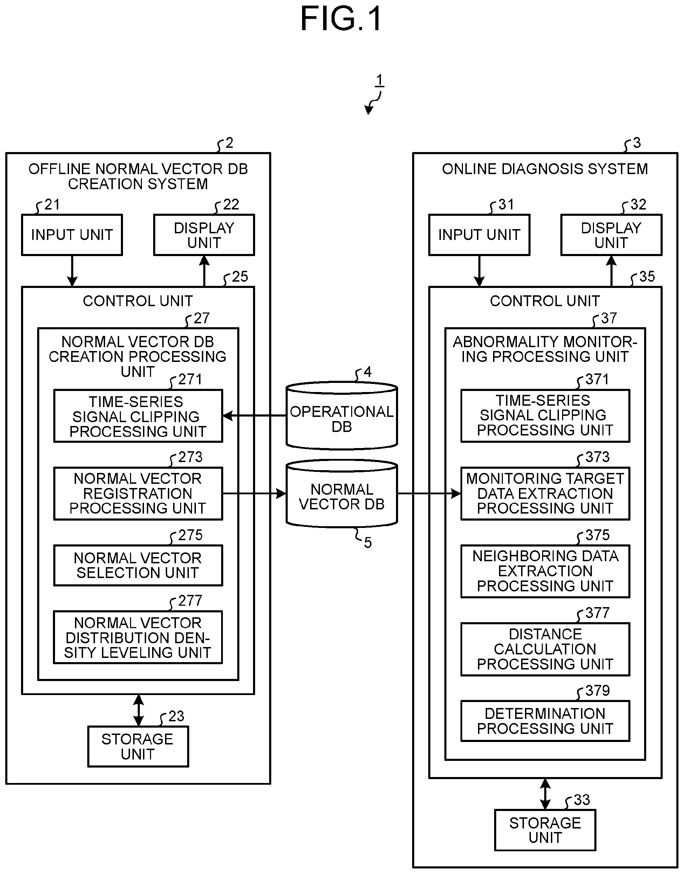

FIG. 1 is a block diagram illustrating a configuration of a facility abnormality monitoring system according to an embodiment of the present invention. As illustrated in FIG. 1, a facility abnormality monitoring system 1 according to an embodiment of the present invention is a system that monitors an abnormality of a target facility that performs a predetermined operation, and includes an offline normal vector database (DB) creation system 2, an online diagnosis system 3, an operational DB 4, and a normal vector DB 5. Note that the operational DB 4 and the normal vector DB 5 may be stored in storage units 23 and 33 included in the offline normal vector DB creation system 2 or the online diagnosis system 3.

The offline normal vector DB creation system 2 is constituted with a general-purpose computer such as a workstation or a personal computer, for example, and includes an input unit 21, a display unit 22, a storage unit 23, and a control unit 25 that controls each unit.

The input unit 21 is constituted with various input devices such as a keyboard, a mouse, a touch panel, and various switches, for example, and outputs an input signal corresponding to an operation input to the control unit 25. The display unit 22 is constituted with a display device such as an LCD, an EL display, or a CRT display, and displays various types of information according to a display control signal input from the control unit 25.

The storage unit 23 is constituted with various types of IC memory such as ROM including flash memory capable of performing update storage, and RAM, a built-in hard disk or a hard disk connected by a data communication terminal, an information storage medium such as a CD-ROM, a reading device thereof, or the like. The storage unit 23 stores a computer program for operating the offline normal vector DB creation system 2 to implement various functions of the offline normal vector DB creation system 2, as well as data used during execution of the computer program, and the like, which are stored in advance, or temporarily stored each time processing is performed.

The control unit 25 is constituted with an arithmetic processing device such as a CPU, and performs instruction, data transfer, and the like to individual units constituting the offline normal vector DB creation system 2 in accordance with an input signal input from the input unit 21 or a computer program, data, and the like stored in the storage unit 23, thereby controlling the operation of the offline normal vector DB creation system 2. The control unit 25 includes a normal vector DB creation processing unit 27.

The normal vector DB creation processing unit 27 is a functional unit that performs processing of creating the normal vector DB 5 used in target facility state monitoring performed by the online diagnosis system 3, and stores normal operation state data of the target facility using time-series data obtained from the target facility during past operation. The normal vector DB creation processing unit 27 includes a time-series signal clipping processing unit 271, a normal vector registration processing unit 273, a normal vector selection unit 275, and a normal vector distribution density leveling unit 277.

The time-series signal clipping processing unit 271 clips a time-series signal of a predesignated period from time-series signals of M (≥ 2) types or more, the time-series signals being signals indicating an operation state of the target facility, collected during normal operation of the target facility and stored in the operational DB 4. For example, a time length required for one operation of the target facility is preset. Subsequently, the time-series signal clipping processing unit 271 clips, from each type of time-series signal, a time-series signal having a preset time length based on the operation start position of the target facility.

The normal vector registration processing unit 273 forms an M-dimensional vector including M types of variables at a same time interval using the M types of time-series signals clipped by the time-series signal clipping processing unit 271, and registers the obtained M-dimensional vector at each time point as a normal vector in the normal vector DB 5. Note that the normal vector registration processing unit 273 may calculate a representative value such as an average value or a maximum value for the M types of time-series signals clipped by the time-series signal clipping processing unit 271, and may form the M-dimensional vector using the calculated representative value.

The normal vector selection unit 275 determines whether to delete each normal vector registered in the normal vector DB 5, and executes processing (vector selection processing) of deleting the normal vector registered in the normal vector DB 5 based on the determination result. The vector selection processing may be omitted. Details of the vector selection processing will be described below.

The normal vector distribution density leveling unit 277 calculates the density distribution in an M-dimensional space of the normal vectors registered in the normal vector DB 5 after the vector selection processing, and executes processing of deleting normal vectors registered in the normal vector DB 5 in accordance with the calculated density distribution (distribution density leveling processing). In addition, the normal vector distribution density leveling unit 277 executes, as the distribution density leveling processing, processing of dividing a vector space of the normal vectors registered in the normal vector DB 5, leveling the distribution density of the normal vectors by determining a representative vector in each divided space, and optimizing the division number of the vector space so that the total number of the representative vectors becomes a predesignated number. The distribution density leveling processing is desirably executed after the vector selection processing, but may be executed before the vector setting processing. Details of the distribution density leveling processing will be described below.

Similarly to the offline normal vector DB creation system 2, the online diagnosis system 3 is constituted with a general-purpose computer such as a workstation or a personal computer, and includes an input unit 31, a display unit 32, a storage unit 33, and a control unit 35 that controls each unit.

The input unit 31 is constituted with various input devices such as a keyboard, a mouse, a touch panel, and various switches, for example, and outputs an input signal corresponding to an operation input to the control unit 35. The display unit 32 is implemented by a display device such as an LCD, an EL display, or a CRT display, and displays various types of information according to a display control signal input from the control unit 35.

The storage unit 33 is constituted with various IC memory devices such as ROM including flash memory capable of performing update storage, and RAM, a built-in hard disk or a hard disk connected by a data communication terminal, an information storage medium such as a CD-ROM, a reading device thereof, or the like. The storage unit 33 stores a computer program for activating the online diagnosis system 3 and implement various functions of the online diagnosis system 3, as well as data used during execution of the computer program, and the like, which are stored in advance, or temporarily stored each time processing is performed.

The control unit 35 is constituted with an arithmetic processing device such as a CPU, and performs instruction, data transfer, and the like to individual units constituting the online diagnosis system 3 in accordance with an input signal input from the input unit 31, a computer program, data, and the like stored in the storage unit 33, thereby controlling the operation of the online diagnosis system 3. The control unit 35 includes an abnormality monitoring processing unit 37.

The abnormality monitoring processing unit 37 is a functional unit that monitors the state of the target facility online (in real time) and performs processing of monitoring an abnormality of the target facility, and monitors the state of the target facility using time-series data obtained from the target facility so as to monitor the abnormality. The abnormality monitoring processing unit 37 includes a time-series signal clipping processing unit 371, a monitoring target data extraction processing unit 373, a neighboring data extraction processing unit 375, a distance calculation processing unit 377, and a determination processing unit 379.

Similarly to the time-series signal clipping processing unit 271, the time-series signal clipping processing unit 371 clips a time-series signal of a section predesignated from the time-series signal obtained from the target facility during operation.

Using the M types of time-series signals clipped by the time-series signal clipping processing unit 371, the monitoring target data extraction processing unit 373 extracts an M-dimensional vector including M types of variables at a same time point as an abnormality determination target vector.

The neighboring data extraction processing unit 375 calculates a distance between the abnormality determination target vector extracted by the monitoring target data extraction processing unit 373 and each normal vector registered in the normal vector DB 5, and extracts a predetermined number of normal vectors from the normal vector DB 5 as neighboring vectors in ascending order of distance.

The distance calculation processing unit 377 calculates a centroid vector of the neighboring vectors extracted by the neighboring data extraction processing unit 375, and calculates a distance between the calculated centroid vector and the abnormality determination target vector extracted by the monitoring target data extraction processing unit 373.

The determination processing unit 379 performs abnormality determination on the target facility based on the distance calculated by the distance calculation processing unit 377. For example, the determination processing unit 379 determines the magnitude of the distance by performing thresholding on the distance using a preset threshold. When the distance is large, the determination processing unit 379 determines that the degree of deviation from the normal vector distribution is large, and determines that the operation state of the target facility is abnormal. The determination processing unit 379 may count the number of times of abnormality determinations on the operation state of the target facility, and may perform thresholding by the number of counts in a predetermined period with a predetermined threshold so as to determine whether repair of the target facility is necessary.

The operational DB 4 stores M or more types of time-series signals indicating the operation state of the target facility, acquired from the target facility during the past normal operation. The normal vector DB 5 stores the normal vector created by the normal vector DB creation processing unit 27 in the offline normal vector DB creation system 2.

### [Vector selection processing]

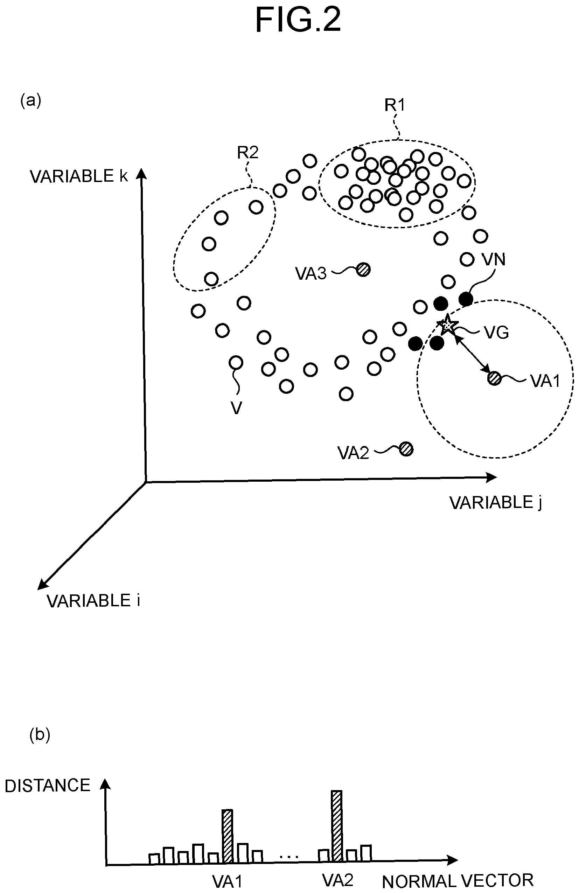

FIGS. 2(a) and 2(b) are diagrams illustrating vector selection processing according to an embodiment of the present invention. In the vector selection processing of the present embodiment, the normal vector selection unit 275 first extracts normal vectors one at a time as determination target vectors sequentially from the normal vector DB 5, and calculates a distance between the determination target vector and the remaining normal vectors. In FIG. 2(a), reference sign V represents a normal vector, and reference sign VA1 represents a determination target vector. Next, the normal vector selection unit 275 extracts a predetermined number of normal vectors as neighboring vectors of the determination target vectors in ascending order of distance, and calculates the distance between the centroid vector of the neighboring data and the determination target vector. In FIG. 2(a), reference numeral VN represents a neighboring vector of the determination target vector VA1, and reference numeral VG represents a centroid vector of the neighboring vector VN.

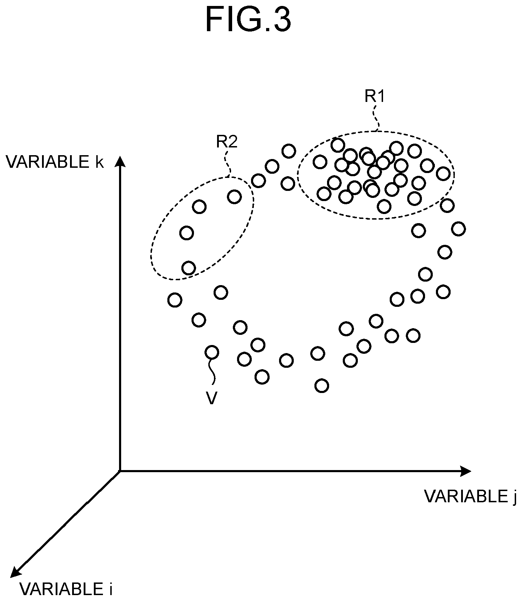

Next, the normal vector selection unit 275 displays, on the display unit 22, the distribution of distances calculated for each determination target vector as illustrated in FIG. 2(b). An engineer determines a normal vector to be deleted based on the distribution of distances displayed on the display unit 22, and inputs information designating the determined normal vector to the input unit 21. Subsequently, in accordance with the information input to the input unit 21, the normal vector selection unit 275 deletes the designated normal vector from the normal vector DB 5. FIG. 3 is a diagram illustrating normal vector distribution after execution of vector selection processing. It turned out that a greatly deviated normal vector has been deleted and the quality of data has been improved. This makes it possible to achieve higher abnormality detection accuracy, higher calculation speed, and lower cost due to data capacity compression. Incidentally, in the diagram illustrating the distribution of distances in FIG. 2(b), the normal vector selection unit 275 may display, as necessary, operation date and time of each facility, the lot number of the product manufactured in this operation, and the operational data as necessary so as to facilitate determination by the engineer.

### [Distribution density leveling processing]

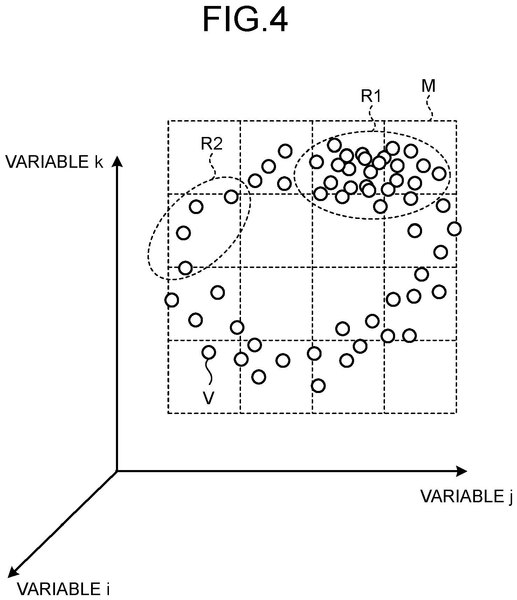

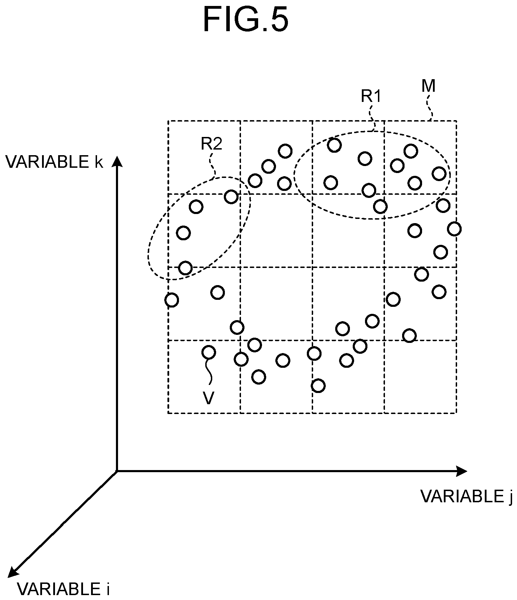

FIG. 4 is a diagram illustrating distribution density leveling processing according to an embodiment of the present invention. As illustrated in FIG. 4, the distribution state of a normal vector G includes a high density region R1 and a low density region R2. Based on this, in the distribution density leveling processing of the present embodiment, the normal vector distribution density leveling unit 277 first sets a range (value range) taken by data for each variable (M types), and equally divides the set range by a predetermined numerical value so as to generate a mesh (partial space) M as illustrated in FIG. 4. Subsequently, the normal vector distribution density leveling unit 277 selects the normal vectors so that the number of normal vectors in each generated mesh M is a predetermined number or less. The predetermined number is determined according to calculation time and calculation accuracy. Examples of a method of selecting a normal vector include a method of selecting in chronological order of dates, and a method of selecting based on the number of times of selection as neighboring data by the normal vector selection unit 275. FIG. 5 is a diagram illustrating normal vector distribution after execution of distribution density leveling processing according to an embodiment of the present invention. As illustrated in FIG. 5, it turned out that the distribution density has been leveled and the quality of data has been improved. This makes it possible to achieve higher abnormality detection accuracy, higher calculation speed, and lower cost due to data capacity compression.

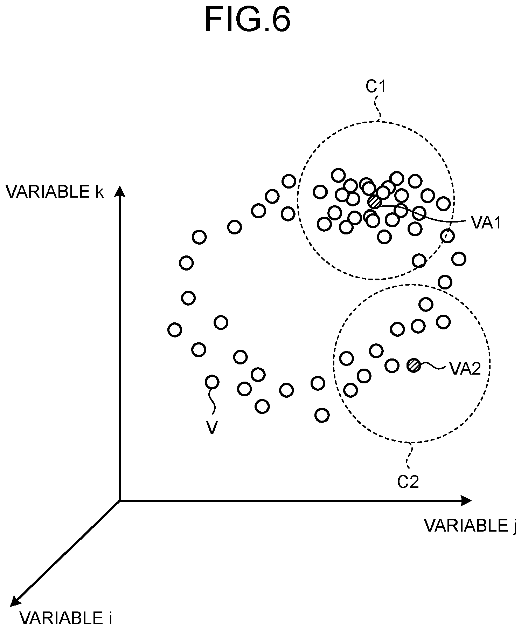

FIG. 6 is a diagram illustrating a modification of the distribution density leveling processing according to an embodiment of the present invention. In the present modification, the normal vector distribution density leveling unit 277 sequentially selects, at first, one normal vector registered in the normal vector DB 5 and then calculates a distance between the selected normal vector and the remaining normal vectors. Next, the normal vector distribution density leveling unit 277 sets a spherical region having a predetermined radius centered on the selected normal vector, and selects the normal vectors so that the number of normal vectors existing in the spherical region is a predetermined number or less. The predetermined number is determined according to calculation time and calculation accuracy. Examples of a method of selecting a normal vector include a method of selecting a normal vector in chronological order and a method of deleting only the initially selected normal vector. However, in a case where a method of deleting only the initially selected vector is used as a method of selecting a normal vector, the processing is repeatedly executed until the density is leveled. In the example illustrated in FIG. 6, reference sign V represents a normal vector, reference signs VA1 and VA2 represent selected normal vectors, and reference signs C1 and C2 represent spherical regions. The leveling of distribution density of the normal vectors the data quality improvement can be achieved also by this modification, making it possible to achieve further higher accuracy of abnormality detection, higher calculation speed, and cost reduction by data capacity compression.

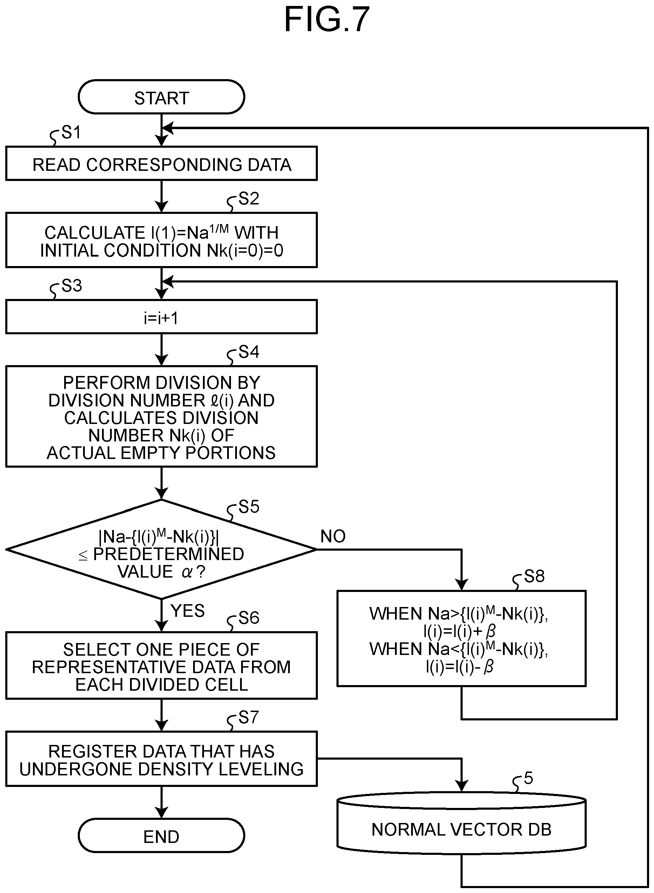

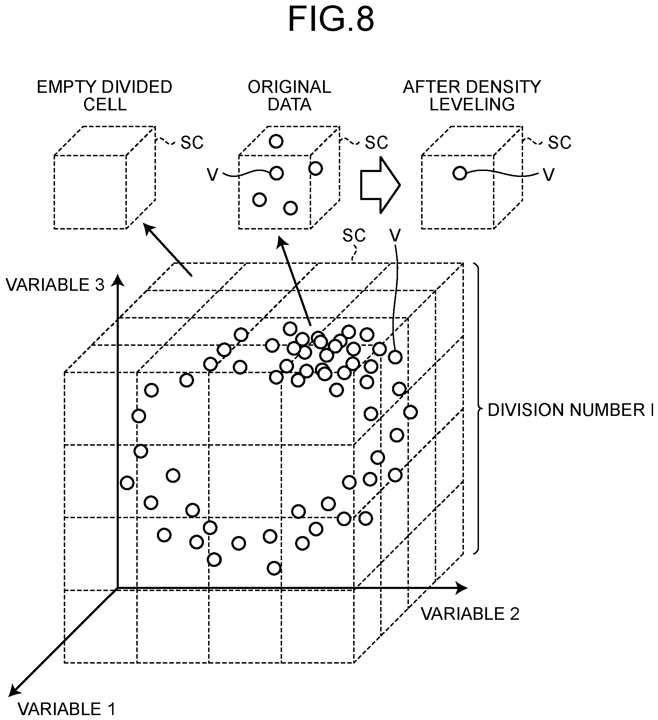

FIG. 7 is a flowchart illustrating a flow of distribution density leveling processing according to another embodiment of the present invention. FIG. 8 is a diagram illustrating the distribution density leveling processing illustrated in FIG. 7. As illustrated in FIG. 7, in the present embodiment, the normal vector distribution density leveling unit 277 first reads data of normal vectors registered in the normal vector DB 5 (Step S1). Next, the normal vector distribution density leveling unit 277 calculates a value of 1(1) = Na^{1/M} with the initial condition Nk = 0 (Step S2). Here, Nk represents the number of divided cells SC being empty and not including the normal vector V (refer to FIG. 8) among the l^{M} divided cells SC (refer to FIG. 8) formed by equally dividing the vector space (M-dimensional space) of the normal vector by a division number 1 for each of the M types of variables. In addition, l(1) indicates the division number of the vector space of the normal vector in the first processing. In addition, Na indicates a target value of data number of normal vector after the density leveling processing prescribed within a range satisfying the restriction of the processing time of the abnormality diagnosis.

Next, the normal vector distribution density leveling unit 277 increments the value of a program counter i (initial value 0) by 1 (Step S3). Next, the normal vector distribution density leveling unit 277 divides the vector space of the normal vector by the division number l(i) and calculates the number Nk(i) of empty divided cells SC (Step S4). Next, the normal vector distribution density leveling unit 277 determines whether the value Na-{l(i)^{M}-Nk(i)} is a predetermined value α or less (Step S5). Here, l(i)^{M}-Nk(i) represents the total number of normal vectors when only one normal vector is included in each divided cell SC. In addition, the predetermined value α indicates a sufficiently small value with respect to the prescribed target value Na (for example, about 10 when Na is 10,000).

When the value of |Na-{l(i)^{M}-Nk(i)}∥ is the predetermined value α or less as a result of the determination (Step S5: Yes), the normal vector distribution density leveling unit 277 proceeds to the processing of Step S6. In contrast, when the value of |Na-{1(i)^{M}-Nk(i)}| is larger than the predetermined value α (Step S5: No), the normal vector distribution density leveling unit 277 proceeds to the processing of Step S8. In the processing of Step S6, the normal vector distribution density leveling unit 277 selects one normal vector from each divided cell SC as representative data (representative vector). However, the number of normal vectors selected from each divided cell SC is not limited to one, and a plurality of normal vectors may be selected. Furthermore, the selection method may use any method such as a method of randomly selecting a normal vector or a method of selecting a normal vector at a position close to the centroid. Subsequently, the normal vector distribution density leveling unit 277 registers the selected representative data in the normal vector DB 5 as data of a normal vector that has undergone density leveling (Step S7) .

In the processing of Step S8, when Na > {l(i)^{M}-Nk(i)}, the normal vector distribution density leveling unit 277 increases the division number as l(i) = l(i)+β to update the processing. In contrast, when Na < {l(i)^{M}-Nk(i)}, the normal vector distribution density leveling unit 277 decreases the division number as l(i) = l(1)-β to update the processing. Here, β is an integer satisfying β > 0 and is to be prescribed as a sufficiently small value as compared with l(i), and an example of this may be β = 1. Through this processing, the normal vector distribution density leveling unit 277 searches for the division number l(i). Subsequently, the normal vector distribution density leveling unit 277 returns the processing to the processing of Step S3.

As described above, in the present embodiment, the normal vector distribution density leveling unit 277 optimizes the division number l so that the number of pieces of representative data becomes close to the predesignated data number Na when the representative data is selected one at a time from the non-empty divided cells SC among the l^{M} divided cells SC formed by equally dividing the vector space of the normal vector by the division number l for each of the M types of variables. This makes it possible to level the distribution density of data without causing unevenness from the original data distribution, and possible to increase the calculation speed without deteriorating the abnormality detection accuracy.

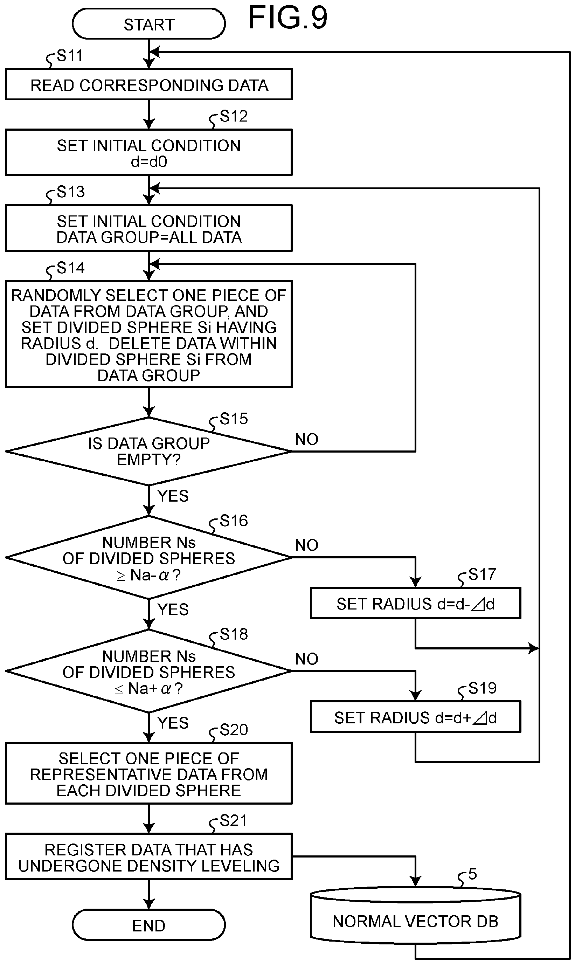

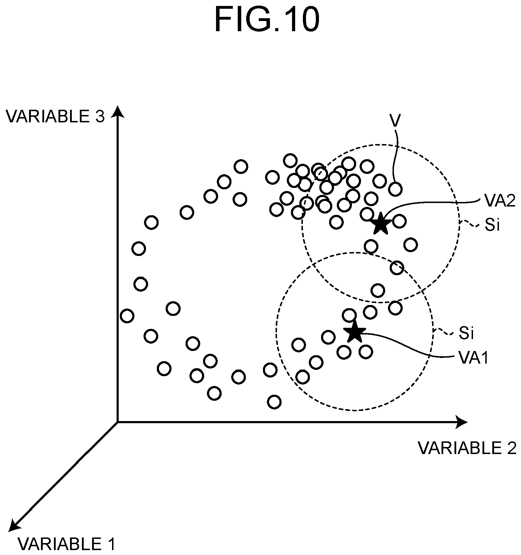

FIG. 9 is a flowchart illustrating a flow of a modification of the distribution density leveling processing according to the another embodiment of the present invention. FIG. 10 is a diagram illustrating the distribution density leveling processing illustrated in FIG. 9. As illustrated in FIG. 9, in the present embodiment, the normal vector distribution density leveling unit 277 first reads data of normal vectors registered in the normal vector DB 5 (Step S11). Next, the normal vector distribution density leveling unit 277 sets an initial value d0 of a radius d of a divided sphere Si (refer to FIG. 10) set in a vector space (M-dimensional space) of the normal vector, as an initial condition (Step S12). Note that d0 may be preferably determined based on a value obtained by dividing a range of possible values of the data number of the normal vector by a value Na to be described below. Next, the normal vector distribution density leveling unit 277 sets all the data read in the processing of Step S11 as a data group to be used in subsequent processing (Step S13).

Next, the normal vector distribution density leveling unit 277 randomly selects data of one normal vector from the data group, and sets the divided sphere Si having the radius d and having a selected normal vector position as a center position. Subsequently, the normal vector distribution density leveling unit 277 deletes the data of the normal vectors included in the divided sphere Si from the data group, and sets the data group after the data deletion, as a data group to be used in subsequent processing (Step S14). Next, the normal vector distribution density leveling unit 277 determines whether the data group is empty (Step S15). When the data group is empty as a result of the determination (Step S15: Yes), the normal vector distribution density leveling unit 277 proceeds to the processing of Step S16. When the data group is not empty (Step S15: No), the normal vector distribution density leveling unit 277 returns to the processing of Step S14.

In the processing of Step S16, the normal vector distribution density leveling unit 277 determines whether a number Ns, which is set as the number of the divided spheres Si, is a predetermined value Na-α or more. Here, Na represents a prescribed value within a range satisfying the restriction of the processing time of abnormality diagnosis. In addition, α indicates a sufficiently small value with respect to the prescribed value Na (for example, about 10 when Na is 10,000). When the number Ns of the divided spheres Si is the predetermined value Na-α or more as a result of the determination (Step S16: Yes), the normal vector distribution density leveling unit 277 proceeds to the processing of Step S18. In contrast, when the number Ns of the divided spheres Si is the predetermined value Na-α or more (Step S16: No), the normal vector distribution density leveling unit 277 changes, as the processing of Step S17, the value of the radius d of the divided sphere Si to be set in subsequent processing to d-Δd, and then returns to the processing of Step S13. Here, an example of the value of Δd may be a value of about 10% of the initial value d0 of the radius d.

In the processing of Step S18, the normal vector distribution density leveling unit 277 determines whether the number Ns, which is set as the number of the divided spheres Si, is a predetermined value Na+α or less. When the number Ns of the divided spheres Si is the predetermined value Na+α or less as a result of the determination (Step S18: Yes), the normal vector distribution density leveling unit 277 proceeds to the processing of Step S20. In contrast, when the number Ns of the divided spheres Si is the predetermined value Na+α or less (Step S18: No), the normal vector distribution density leveling unit 277 changes, as the processing of Step S19, the value of the radius d of the divided sphere Si to be set in subsequent processing to d+Δd, and then returns to the processing of Step S13.

In the processing of Step S20, the normal vector distribution density leveling unit 277 selects one normal vector (normal vectors VA1 and VA2 in FIG. 10) from each of the divided spheres Si as representative data (representative vector). However, the number of normal vectors selected from each divided cell SC is not limited to one, and a plurality of normal vectors may be selected. Furthermore, the selection method may use any method such as a method of randomly selecting a normal vector or a method of selecting a normal vector at a position close to the centroid. Subsequently, the normal vector distribution density leveling unit 277 registers the selected representative data in the normal vector DB 5 as data of a normal vector subjected to density leveling (Step S21).

As described above, in the present modification, the normal vector distribution density leveling unit 277 sets a plurality of divided spheres Si having the radius d and having their center positions not overlapping each other, and optimizes the radius d of the divided sphere Si so that the number of pieces of representative data becomes close to the predesignated data number Na when the representative data is selected one at a time from each of the divided spheres Si. This makes it possible to level the distribution density of data without causing unevenness from the original data distribution, and possible to increase the calculation speed without deteriorating the abnormality detection accuracy.

### Industrial Applicability

According to the present invention, it is possible to provide a normal vector registration device, a facility abnormality monitoring system, and a facility abnormality monitoring method capable of achieving a high calculation speed and cost reduction by data capacity compression.

### Reference Signs List

1 FACILITY ABNORMALITY MONITORING SYSTEM
2 OFFLINE NORMAL VECTOR DATABASE (DB) CREATION SYSTEM
3 ONLINE DIAGNOSIS SYSTEM
4 OPERATIONAL DB
5 NORMAL VECTOR DB
21, 31 INPUT UNIT
22, 32 DISPLAY UNIT
23, 33 STORAGE UNIT
25, 35 CONTROL UNIT
27 NORMAL VECTOR DB CREATION PROCESSING UNIT
37 ABNORMALITY MONITORING PROCESSING UNIT
271 TIME-SERIES SIGNAL CLIPPING PROCESSING UNIT
273 NORMAL VECTOR REGISTRATION PROCESSING UNIT
275 NORMAL VECTOR SELECTION UNIT
277 NORMAL VECTOR DISTRIBUTION DENSITY LEVELING UNIT
371 TIME-SERIES SIGNAL CLIPPING PROCESSING UNIT
373 MONITORING TARGET DATA EXTRACTION PROCESSING UNIT
375 NEIGHBORING DATA EXTRACTION PROCESSING UNIT
377 DISTANCE CALCULATION PROCESSING UNIT
379 DETERMINATION PROCESSING UNIT

## Claims

1. A normal vector registration device comprising:
a time-series signal clipping processing unit configured to clip a time-series signal in a predetermined period from M (≥ 2) or more types of time-series signals indicating an operation state of a facility during normal operation of the facility;
a normal vector registration processing unit configured to
generate an M-dimensional vector including M types of variables at a same time point from the time-series signal clipped by the time-series signal clipping processing unit, and
register the generated M-dimensional vector at each time point in a database as a normal vector; and
a normal vector distribution density leveling unit configured to
divide a vector space of the normal vectors, select a predetermined number of normal vectors from the normal vectors included in each divided space so as to level a distribution density of the normal vectors, and
optimize a division number of the vector space of the normal vectors such that a total number of the selected normal vectors becomes a predesignated number.

2. The normal vector registration device according to claim 1, wherein the normal vector distribution density leveling unit is configured to
equally divide the vector space into a plurality of cells, and
select a predetermined number of normal vectors from each cell including normal vectors so as to level normal vector distribution density, and
optimize sizes of the cells such that a total number of the selected normal vectors becomes a predesignated number.

3. The normal vector registration device according to claim 1, wherein the normal vector distribution density leveling unit is configured to
set, within the vector space, a plurality of spheres whose center positions do not overlap each other and whose center positions are defined as randomly selected normal vectors,
select a predetermined number of normal vectors from each sphere so as to level the distribution density of the normal vectors, and
optimize the sizes of the spheres such that the total number of the selected normal vectors becomes a predesignated number.

4. The normal vector registration device according to any one of claims 1 to 3, further comprising a normal vector selection unit configured to:
calculate a distance between each normal vector registered in the database and another normal vector registered in the database; and
delete the normal vector from the database in accordance with the calculated distance.

5. The normal vector registration device according to claim 4, wherein the normal vector selection unit is configured to perform processing including:
calculating a distance between each normal vector registered in the database and another normal vector registered in the database;
extracting a predetermined number of the other normal vectors as neighboring vectors in ascending order of the calculated distance; and
deleting the normal vector from the database in accordance with a distance to a centroid vector of the extracted neighboring vector.

6. A facility abnormality monitoring system comprising an abnormality determination unit configured to:
clip a time-series signal in a predetermined period from M (≥ 2) or more types of time-series signals indicating an operation state of a facility during an abnormality monitoring period of the facility;
generate, from the clipped time-series signal, an M-dimensional vector including M types of variables at a same time point as an abnormality determination target vector; and
conduct an abnormality determination of the facility based on a distance between the generated abnormality determination target vector and a normal vector registered in a database by the normal vector registration device according to any one of claims 1 to 5.

7. The facility abnormality monitoring system according to claim 6, wherein the abnormality determination unit is configured to determine whether to repair the facility based on the number of times the facility has been determined to be abnormal.

8. A facility abnormality monitoring method comprising an abnormality determination step including:
clipping a time-series signal in a predetermined period from M (≥ 2) or more types of time-series signals indicating an operation state of a facility during an abnormality monitoring period of the facility;
generating, from the clipped time-series signal, an M-dimensional vector including M types of variables at a same time point as an abnormality determination target vector; and
conducting an abnormality determination of the facility based on a distance between the generated abnormality determination target vector and a normal vector registered in a database by the normal vector registration device according to any one of claims 1 to 5.
